# NEW EUROPEAN PATENT SPECIFICATION

(11) **EP 0 484 471 B2**
(45) Date of publication and mention of the opposition decision: **19.01.2000**
(45) Mention of the grant of the patent: 14.12.1994
(21) Application number: 91906361.0
(22) Date of filing: 04.03.1991
(51) Int. Cl.: G03G 15/00

(54) **MULTICOLOR IMAGING METHOD AND APPARATUS**
VERFAHREN UND VORRICHTUNG ZUR ERZEUGUNG EINER FARBABBILDUNG
PROCEDE ET APPAREIL D'IMAGERIE MULTICOLORE

(30) Priority: 04.06.1990 US 533237; 04.06.1990 US 532832
(43) Date of publication of application: 13.05.1992
(73) Proprietor: EASTMAN KODAK COMPANY, Rochester, New York 14650-2201 (US)
(72) Inventor: JAMZADEH, Fereidoon, Shahjahan, Fairport, NY 14450 (US); CHOWDRY, Arun, Pittsford, NY 14534 (US); JOHNSON, Kevin, Michael, Rochester, NY 14607 (US); ZEMAN, Robert, Edward, Webster, NY 14580 (US)
(74) Representative: Blickle, K. Werner, Dipl.-Ing.
(86) International application number: US9101450
(87) International publication number: WO9119229

(56) References cited:
- JP-A- 2 023 376
- US-A- 4 046 470
- US-A- 4 408 301
- US-A- 4 706 099
- US-A- 4 712 906
- US-A- 4 775 886

## Description

### TECHNICAL FIELD

This invention relates to the formation of multicolor images, particularly multicolor images formed by creating a series of single color toner images and transferring those toner images in registration to a receiving sheet. Although not limited thereto, the invention has particular utility in adapting electrophotographic multicolor processes to the field of photofinishing.

### BACKGROUND ART

In conventional color electrophotography a series of electrostatic images are created on an image member. The images are toned with different colored toners and then transferred in registration to a receiving surface to create a multicolor toner image. Typically, the receiving surface is a receiving sheet of paper or similar material which has been secured around the periphery of a transfer drum. The transfer drum is rotated in contact or near contact with the image member to repeatedly bring the receiving sheet into transfer relation with the consecutive images to overlay them in registration. For example, document US-A- 4 712 906 describes a method and an apparatus according to the preambles of claims 1 and 6.

The photofinishing business worldwide thrives on a few commonly desired sizes of prints. In the United States, for example, nearly all prints are either (in inches) 4x6, 5x7, 8X10, or 11x17 (one inch = 2,54 cm). Nearly all photofinishing operations produce many more of the smallest size (4x6) than of all of the larger sizes put together. However, some flexibility is necessary in all machines that are not dedicatd 100% to snapshots.

In silver halide photofinishing, this flexibility is supplied by supplying photographic paper in roll form, exposing and processing whatever pictures and whatever sizes are programmed into the printer and then cutting the prints to size later. It is known to cut the photographic paper both across the direction of movement and with the direction of movement so that some prints can be exposed side-by-side. Although a machine 100% dedicated to snapshots, for example, 4x6, may use either 4-inch wide or 6-inch wide rolls, it is more common to mix sizes on the same larger roll and custom cut. For example, 8-inch wide paper can be used for two rows of 4x6 images or one row of 8x10 images with both sets of images being positioned with their long dimension running with the direction of movement of the paper. All the 4x6's can be batched and the cutter set to cut 4x6's and then all of the 8x10's batched and the cutter repositioned for cutting 8x10's. The slitting and cutting art is sophisticated. Virtually any arrangement can be done automatically.

In electrophotography, all commercial color systems require the use of cut sheets. In most systems a single cut receiving sheet is positioned around a transfer roller by attaching both its leading edge and its trailing edge to the roller. The roller is rotated through a nip with a toner image carrying image member once for each color image to be transferred.

If cut sheets are attached by both the leading and trailing end to a transfer roller and the apparatus is flexible enough to take sheets of different length, larger sheets will necessarily overlap the trailing end securing means of the shorter sheets. This presents a problem to transfer in these areas that has not been 100% solved for highest quality imaging. That is, vacuum holes under a sheet in a transfer nip in which transfer is done either by electrostatics or by heat affects the transfer enough to be noticeable in the image itself. Gripping fingers create even more noticeable artifacts.

The document JP-A-02 023 276 describes a digital color copying machine including a mosaic monitor mode. In the mosaic monitor mode, image data corresponding to a partial area of the original image is stored in a RAM. Each of the plurality of partial image areas is subjected to different color adjustments. The plurality color adjustments are printed on a receiving sheet and the operator chooses a desired color adjustment from the plurality. Finally, a single print is formed with the parameters of the choosen color adjustment.

Electronic electrophotographic imaging, for example, imaging by exposing a photoconductive image member with a laser or LED printhead, has added new flexibility to electrophotography and other similar systems. For example, U.S. 4,706,099 shows an electrophotographic copier in which a photoconductor having a width in excess of 16 inches scans a wide image fully across the photoconductor. When narrower images are desired, image information in memory is rasterized in a manner that causes the images to be scanned in pairs side-by-side across the width of the photoconductor. The images are transferred side-by-side to separate sheets stored on a roll and cut prior to transfer. Because it is a single color machine, the problem of a transfer roller holding sheets of different size is not faced.

This patent illustrates the capability present in the art to store image information in memory, retrieve it and place it at any desired location and orientation (portrait or landscape) desired on an image member such as a photoconductor. See also, for example, U.S. Patent 4,408,301. In fact, electronic copiers and printers are available which allow the operator to pick the position, orientation and magnification of any stored image and place more than one image on the same final print.

### DISCLOSURE OF THE INVENTION

It is an object of the invention, to provide a method and apparatus for forming multicolor images as defined by claim 1, respectively claim 6, which method and apparatus has the flexibility of providing different size images without the problems of handling either roll stock or differing size sheets through at least a portion of the apparatus.

This and other objects are accomplished by utilizing a single large size transfer sheet for all images regardless of image size and using an electronic exposure means and suitable electronics to position efficiently the images on that sheet. The receiving sheet is then cut according to the size of the images thereon after transfer.

This approach permits all or portions of the paper handling part of the system to have the efficiency of working with a single sized discrete sheet. At the same time the apparatus has the flexibility of providing a variety of sizes of prints.

Although several portions of the paper path in a printer benefit from working with a single sized sheet, the invention has its most spectacular advantage in a preferred embodiment in which a transfer drum is designed to take only a single size sheet but the apparatus can produce a variety of sizes of print. The invention thus provides the flexibility of continuous roll processing in a machine that has a strong technical preference for cut sheets.

According to a preferred embodiment, the single large sheets are exactly integer multiples of the most common size print to be made (for example, snapshot size prints) thereby providing no waste in a cutting operation to be performed after transfer. For example, a sheet 12 inches by 18 inches will take nine 4x6 images exactly and without waste. The same size receiving sheet will accommodate 5x7's, 8x10's and 11x17's with some waste or border.

According to another preferred embodiment, the arrangement of the smaller images can provide a margin between such smaller images in the cross track direction of the system. If a discontiuity occurs repetitively in the process because of the edges of a transfer sheet moving through an image member-transfer member nip, an incremental exposure means (for example, a laser) can be positioned to be exposing at that margin when the discontinuity occurs. This will reduce the effect of the discontinuity on image quality.

### BRIEF DESCRIPTION OF THE DRAWINGS

In the detailed description of the preferred embodiment of the invention presented below, reference is made to the accompanying drawings, in which:
Fig. 1 is a side schematic of a multicolor image forming apparatus.
Figs. 2, 3, 4 and 5 are top views illustrating receiving sheets having various size image areas prior to cutting.
Fig. 6 is a perspective view of an embodiment of a portion of the apparatus shown in Fig. 1, with many parts eliminated for clarity of illustration.
Figs. 7, 8 and 9 are side schematics of the apparatus portion shown in Fig. 6 illustrating the relative movement of a transfer roller with respect to an imaging drum.
Fig. 10 is a side schematic of a portion of an embodiment of the apparatus shown in Fig. 1 illustrating another mechanism for moving the transfer roller with respect to the imaging drum.
Fig. 11 is a partial cross-section of the transfer roller and imaging drum shown in Fig. 10 illustrating a preferred form of transfer.
Figs. 12, 13, 14 and 15 are side schematics of the transfer roller and imaging drum illustrating one approach to coordination of those members.
Figs. 16-19 are side schematics similar to Figs. 12-15 illustrating an alternative approach to coordination of those members.
Figs. 20-23 are side schematics similar to Figs. 12-15 illustrating another approach to coordination of those members.
Figs. 24-27 are side schematics similar to Figs. 12-15 illustrating still another approach to coordination of the transfer roller and imaging drum.
Figs. 28 and 29 are top views of two different instances in the revolution of an alternative transfer roller drum embodiment to that shown in Figs. 6-10.
Figs. 30 and 31 are side schematics similar to Figs. 13-14 illustrating coordination of the transfer roller and imaging drum shown in Figs. 28 and 29.

### BEST MODE OF CARRYING OUT THE INVENTION

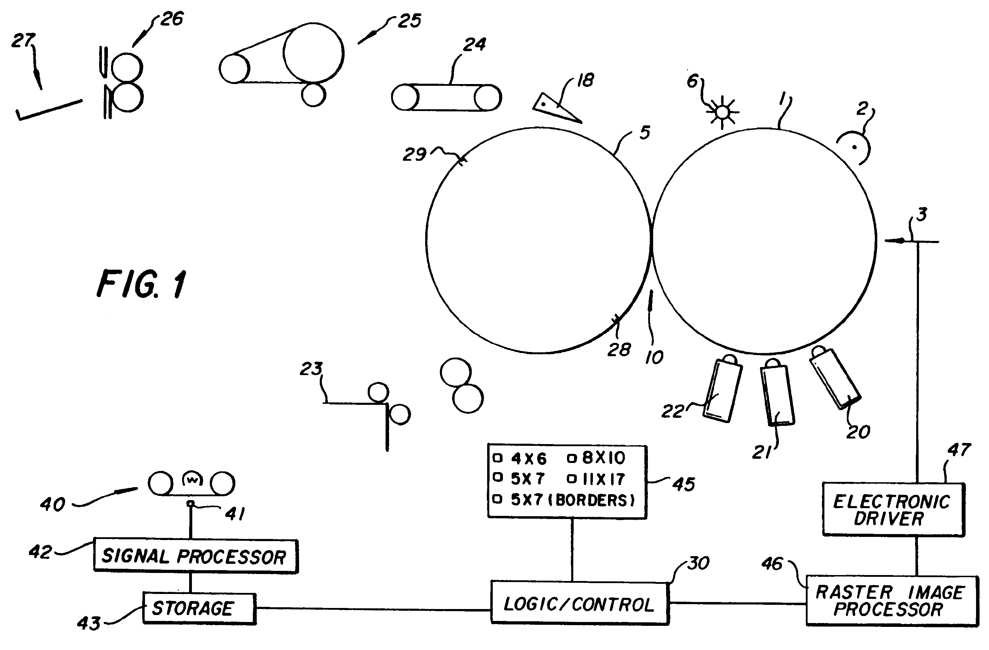

Fig. 1 illustrates a multicolor image forming apparatus utilizing electrophotography. Most of it is conventional. An image member, for example, a photoconductive drum 1, is rotated by a motor, not shown, past a series of electrophotographic stations, all well-known in the art. A charging station 2 uniformly charges the surface of the drum 1. The uniformly charged surface is exposed at an exposure station, for example, laser exposure station 3, to create a series of electrostatic images, each representing a color separation of a multicolor image to be formed. The series of electrostatic images are toned by different color toner stations 20, 21 and 22, one different color for each image, to create a series of different color toner images. The images are then transferred in registration to a receiving sheet carried on the periphery of a transfer roller 5. The drum 1 is cleaned by cleaning station 6 and reused.

The receiving sheet is fed from a receiving sheet supply 23 into a nip 10 between drum 1 and roller 5. As it approaches nip 10 it is secured to drum 5 by a vacuum means, gripping fingers or other mechanism. For example, the leading end of the sheet can be secured by a row of vacuum holes 28 and the trailing end by a row of vacuum holes 29.

After all 3 (or 4) color separation toner images have been transferred to the surface of the receiving sheet, the leading edge of the receiving sheet is stripped from roller 5 by stripping mechanism 18. The receiving sheet is pushed by further rotation of roller 5 onto a sheet transport 24 which carries it to a fixing device 25 and then to a cutter 26. After the sheet has been cut by the cutter 26 the resulting prints are collected in a tray 27 or more sophisticated print collecting device.

The input for exposure station 3 begins with a color scanner 40 which includes a color responsive CCD 41 for scanning an original to be printed, for example, 35mm color negative film. The output from CCD 41 is fed to a signal processor 42 which converts the CCD signal into a form suitable for storing in memory. For example, signal processor 42 can use suitable compression algorithms to save on storage, enhance the image in both its color aspects and its resolution including color masking, halftone screening, etc. all processes well known in the art. After such signal processing, the image information is stored in a suitable storage 43. Because this system demands substantial storage, a preferred form of storage is a system using magnetic disks.

A logic and control 30 is capable of accessing the storage 43 and also receives inputs from various portions of the machine including encoders (not shown) on drum 1 and roller 5 and various stations to manage the timing of the entire apparatus. One of the inputs to logic and control 30 is a print size designation portion 45 of an operator control panel. As shown in Fig. 1, the operator can press a button beside any of four print sizes ranging from 4x6 through 5x7, 8x10, 11x17 and also 5x7 with borders. The logic and control 30 then receives the input from the print size designation portion 45 and the memory 43 and supplies that information in an appropriate form to raster image processor 46 which lays out the bit map for the ultimate exposure. The output from the raster image processor 46 is fed to an electronic driver 47 for electronic exposure station 3 to control the intensity of a laser, LED printhead, or the like, making up that station.

Prior electrophotographic color apparatus capable of providing a variety of sizes of sheets has a sheet supply 23 which can be loaded with different sizes of sheets and a transfer drum 5 which is capable of holding different size sheets. These devices have specific complexities that are undesirable in such apparatus including the flexibility in the sheet supply and other portions of the paper path. However, the most serious problems arise in securing the sheets to transfer roller 5. If both the leading and trailing edge of the sheet are to be held by a vacuum means 28 and 29 as shown in Fig. 1, those vacuum means must be separated by different lengths of the drum periphery for different size sheets. The drum being the same size, small prints will be produced at the same slow rate that larger prints are produced. More significantly, image quality in the large sheets will suffer from the vacuum holes that are necessarily under their image areas.

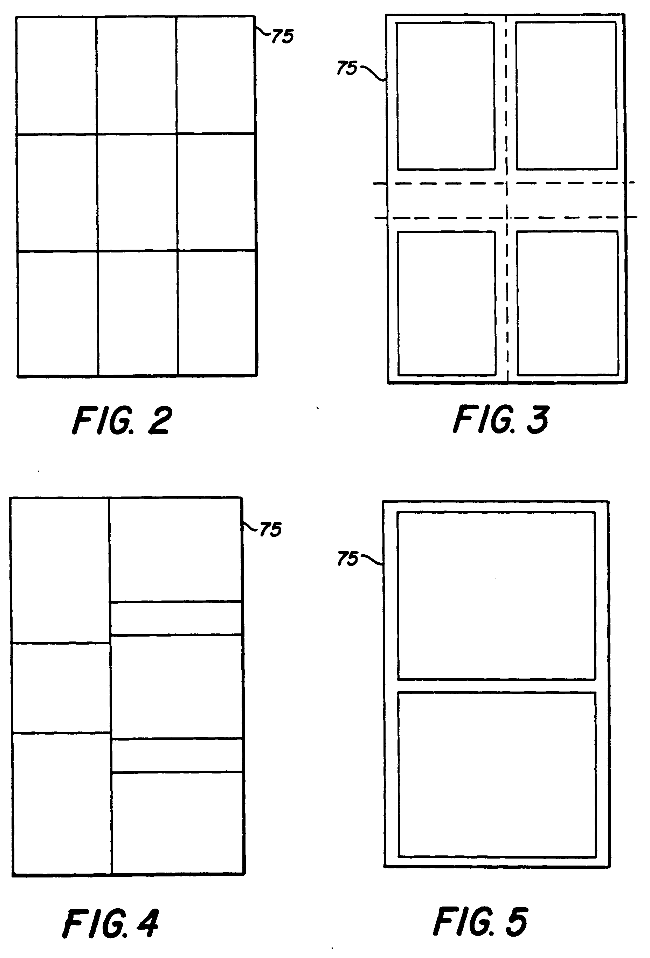

To solve this problem, the apparatus as shown in Fig. 1 is capable of taking a single large size sheet, for example, 12 inches by 18 inches. Only 2 sets of vacuum holes are provided and the apparatus is optimized for productivity for the single size sheet. The sizes are chosen to allow later cutting for the print size produced. Examples of preferred image locations for different sizes of image are shown in Figs. 2-5. According to Fig. 2 a 12 inch by 18 inch receiving sheet 75 can hold nine 4x6 images exposed edge-to-edge with no waste. The other common sizes will produce some waste with a 12x18 inch receiving sheet. Although vacuum holes 28 and 29 will in fact be under the very leading and trailing edges of the receiving sheet 75, they can be limited to the leading and trailing one quarter inch where such defects are least likely to be noticed. Alternatively, a narrow leading and trailing margin can be provided and later trimmed.

Figs. 3 and 4 show two approaches to positioning 5x7 images on a 12x18 receiving sheet. Other such arrangements for 5x7's can be designed. The Fig. 4 arrangement is the most efficient, fitting five 5x7's on a 12x18 receiving sheet. The Fig. 3 arrangement fits only four 5x7's in the same space, but has several advantages. A primary one is that if the receiving sheet is cut along the dotted lines shown in Fig. 3, a 1/2 inch border is provided for each print. Further, the cutting itself is far simpler than that in Fig. 4. Although automatic equipment is available that will cut and slit the geometry shown in Fig. 4, equipment to cut that geometry shown in Fig. 3 is far simpler.

Fig. 5 illustrates two 8x10 images on a 12x18 receiving sheet. With this geometry, if the sheet is cut exactly in half the 8x10's will have 1/2 inch borders on the top and bottom and 1-inch borders on the sides. The 11x17 format is not illustrated. It, of course, would fit on a 12x18 with half-inch borders on top, bottom and both sides.

Although snapshots are popular without a border, larger prints often are mounted with a border. The 12x18 size allows production of four 5x7's, two 8x10's and one 11x17 with even borders. It is presently within the skill of the art to provide a selection of colors for borders produced on color copiers. This same technology can be used to permit choice of border color for each print larger than 4x6 in the apparatus shown in Fig. 1, by exposing the border area uniformly for one or more of the color separations.

The 12 inch x 18 inch size is particularly useful in the United States with the standard print sizes discussed above. Most of these sizes have been standard in the United States for printing from 35mm film for more than 40 years. However, other size receiving sheets may be optimum for other circumstances. For example, in markets in which 4x6 is not the high volume size, integer multiples of whatever that size is is a preferred starting point in determining the preferred receiving sheet size. Further, if customers prefer snapshots with borders, which are not presently popular, then the receiving sheet would either have to be made larger by the amount of the borders, or the image area reduced in size. Other arrangements could include a combination of different size prints from the same receiving sheet, for example, seven 4x6 prints and one 5x7. All of this is well within the skill of the art within the general framework of this description.

The slitting, chopping or cutting arts are extremely well developed. Devices are presently available that can be set to slit or cut any sheet at a variety of locations. However, a medium volume photofinishing operation may install a less expensive automatic cutting device that cuts only a single high volume print, for example, 4x6 snapshots and allows all other sizes to be trimmed by hand. In such a device the cutter 26 would be either disableable or there would be a path around it for sizes larger than the high volume size.

Although the use of single, large size cut sheets provides its greatest advantage in reliability and convenience in securing the sheets to the transfer member, other places in the sheet handling system also benefit. For example, paper transport design is easier and less costly both between transfer and fusing and between paper supply and transfer if the apparatus does not need to be capable of taking snapshot size cut sheets and if the paper supply need not be size-flexible. Thus, this invention can be used to advantage even in systems in which the receiving sheet is not wrapped around a transfer drum. For example, a color system in which the color images are combined on the surface of a transfer drum and transferred to a receiving sheet in a single step would still benefit from handling a single large size sheet through the sheet handling path.

The process illustrated in Fig. 1 can be capable of extremely high-quality imaging. The quality of that imaging is dependent on many portions of the process. In particular, it is dependent on the resolution of the exposure device 3, the size of the toners used to create the toner images and the registration associated with the exposure and transfer stations. To compete with ordinary photography in making prints, extremely fine toners are necessary. It is presently possible to tone images with toners as small as 3.5 microns and smaller which toners provide extremely high-quality images if correctly registered.

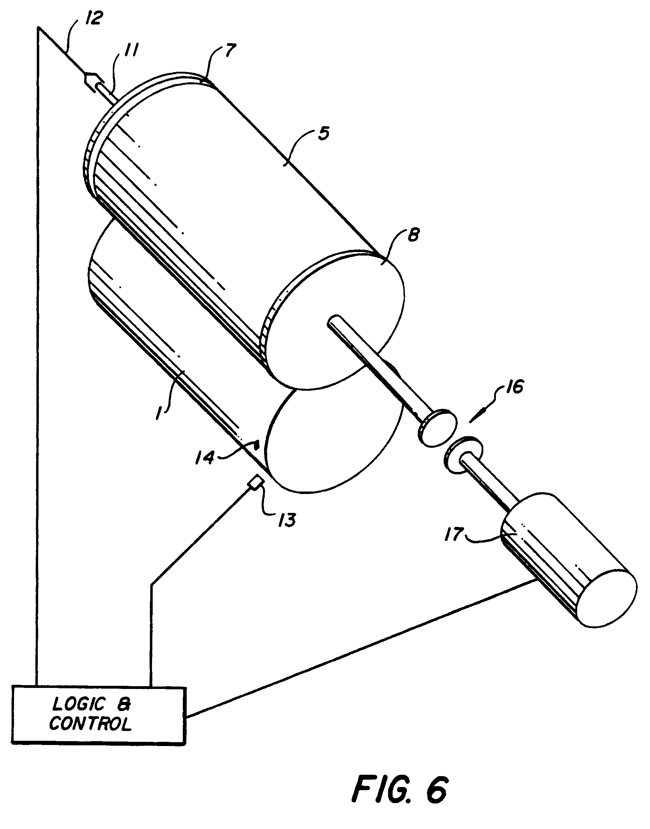

Transfer of extremely fine toners is difficult to do electrostatically. Better results are obtained by a combination of heat and pressure. If substantial pressures are used in the transfer process, for example, pressures in excess of forty pounds per square inch, and both the transfer roller and the image drum are independently driven, excessive wear will result to the surfaces in contact, which wear is especially damaging to the photoconductive surface of the imaging drum. To maintain extremely precise registration for full utilization of extremely fine toner particles and high quality exposure, the transfer roller is separated from the image member and reindexed for every revolution of the transfer roller. This particular approach provides extremely precise registration of the transfer roller 5 and is illustrated in Figs. 6-10.

According to Fig. 6 transfer roller 5 has a pair of cam disks 7 and 8 of the same diameter as roller 5 but centered about a different axis. They are fixed to roller 5 and are rotated with roller 5. Roller 5 is rotated by engagement with image member 1 during transfer. When transfer is finished, cam disks 7 and 8 acting either directly on drum 1 or on separate disks (not shown) journaled on the same shaft as drum 1, separate roller 5 from engagement with drum 1. After such separation, roller 5 is driven by a stepper motor 17 through a clutch 16. Roller 5 is driven by motor 17 to a home position controlled by an indicia 11 associated with roller 5 and sensed by a sensor 12. From the home position, motor 17 drives roller 5 up to its appropriate speed and rotational position for reengagement as controlled by disks 7 and 8.

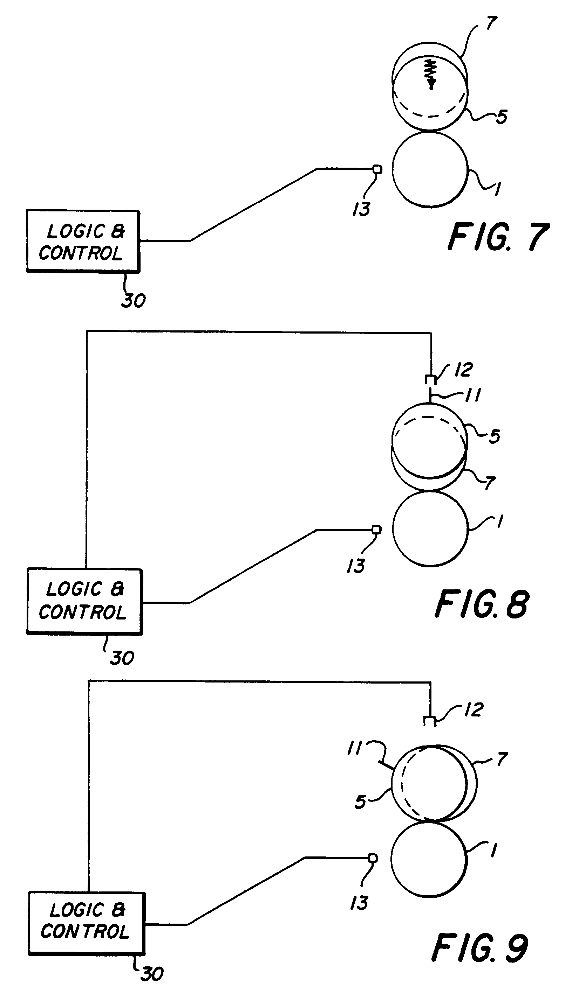

This process is illustrated in Figs. 7-9. According to Fig. 7, roller 5 is in contact with drum 1 during image transfer. As shown in Fig. 8, after transfer, disk 7 separates transfer roller 5 from drum 1 and stepper motor 17 (Fig. 6) drives roller 5 until indicia 11 is sensed by sensor 12, at which point stepper motor 17 stops. The rotational position of drum 1 is also sensed, for example, by sensing an indicia 14 with a sensor 13 on the periphery of drum 1. Logic and control 30 receives signals from both sensors 12 and 13. In timed relation to receiving the signal from sensor 13 motor 17 is started again and driven until engagement of roller 5 with drum 1 is completed. Motor 17 is a high-quality stepper motor which is capable both of accurately positioning roller 5 at its home position and accurately driving it from that home position so that it is going at the same speed as drum 1 during engagement, which engagement is shown in Fig. 9. After engagement clutch 16 is disengaged and roller 5 is again driven by drum 1.

With the quality of stepper motor and sensors presently available, registration of a higher quality can be maintained between images than if the drum 1 is allowed to rotate the roller 5 through the entire cycle.

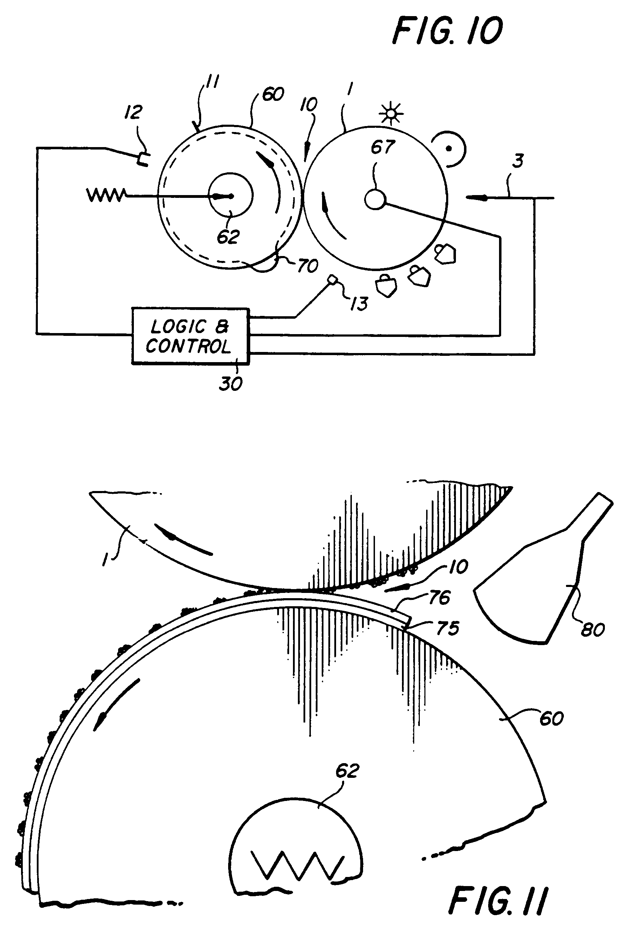

Fig. 10 illustrates this approach in an apparatus similar to that of Fig. 1. Note that a transfer roller 60 is driven by engagement with drum 1 except when a cam 70 rotating with roller 60 contacts drum 1 and disengages roller 60 therefrom.

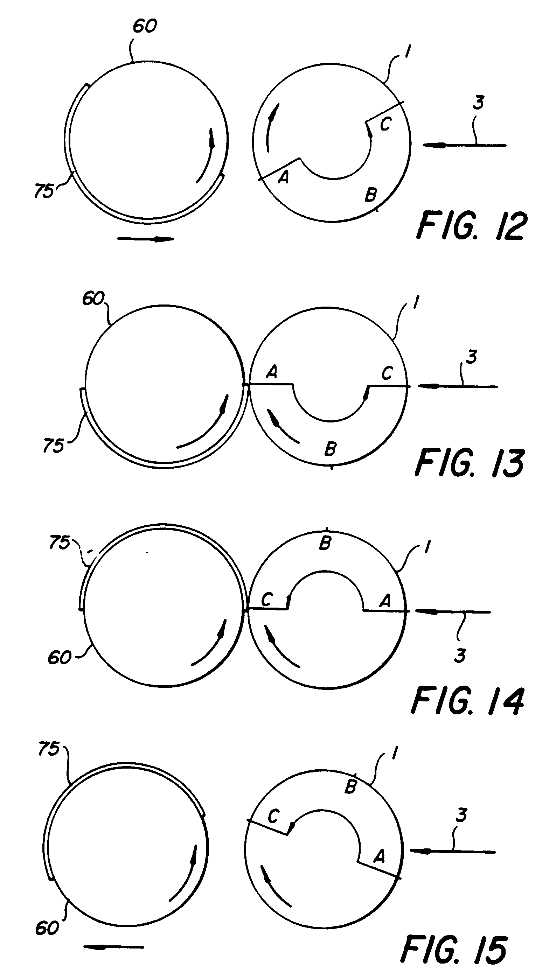

Fig. 11 illustrates the type of transfer with which the structure shown in Figs. 6-10 is particularly usable. According to Fig. 11, extremely small toner particles making up a toner image are transferred from drum 1 to a receiving sheet 75, which receiving sheet includes a thermoplastic outer layer 76. Layer 76 is heat softenable as is the toner. According to a process more thoroughly described in U.S. Patent No. 4,968,578, Rimai et al, METHOD OF NON-ELECTROSTATICALLY TRANSFERRING TONER, issued November 6, 1990, the receiving sheet 75 and particularly outer layer 76 is raised to a temperature which softens the thermoplastic layer 76. This is accomplished by heating roller 60 internally, using heating lamp 62 and also may be accomplished by externally heating thermoplastic layer 76, for example, by externally located lamp 80. The heat of the receiving sheet 75 also heats the toner in the nip 10. The edges of the toner sinter or become soft. The layer of toner which first contacts the softened thermoplastic layer 76 becomes embedded in it and the rest of the toner which has also become soft or sintered sticks to the toner that is so embedded. Transfer is thus effected to the thermoplastic layer 76 as shown in Fig. 11. This process works best at relatively high pressures, for example, pressures well in excess of 100 pounds per square inch. Lower pressures are also effective, especially working with larger sized toners with more modest quality images on regular uncoated paper. Good thermal transfer from the interior of the roller 60 while maintaining relatively high pressures is best obtained if both drum 1 and roller 60 are hard rollers and do not contain a nip widening compliant surface. Again, for less high-quality work, especially with plain paper, roller 60 can have a slightly compliant surface as is more customary in the art.

It is common in many color copiers using a drum photoconductor to provide a substantial fly wheel driven with the drum to even out the rotation of the drum to avoid image defects. Defects that are repeated in all colors in the same way are less objectionable than a defect that occurs only in one color and not in others. The latter defect may show up as a shift in color and be quite noticeable. For that reason, it is common to have both the drum and transfer roller of the same size and form one image for each revolution of each. Thus, any variations in the periphery of the drum or transfer roller or variations that occur repeatedly in the motion of either will be repeated with each image and not show as a misregistration of colors.

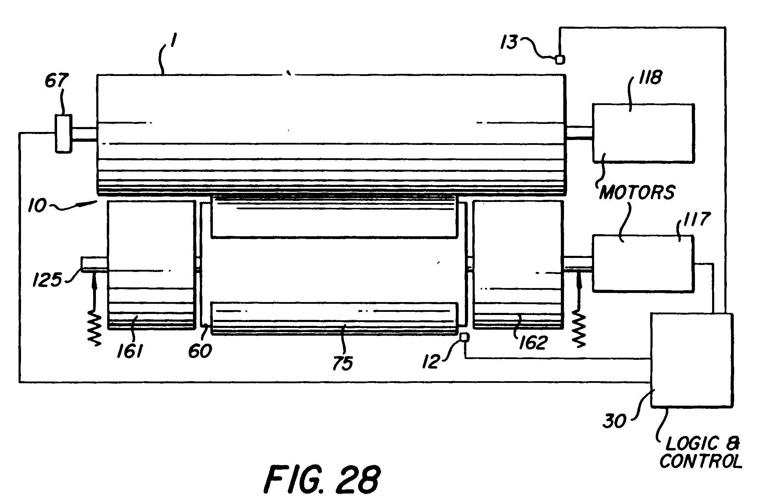

As mentioned above, precision in the exposure station is one of the ingredients which provides extremely high quality results that makes an electrophotographic application competitive with regular photography. Referring to either Figs. 1 or 10 it is noted that the transfer station and the exposure station are approximately 180° apart from each other. At the same time that the electronic exposure station 3 is writing an image, the transfer station is going through its cycle. The transfer station itself involves discontinuities in the mechanical interface between drum 1 and roller 60. For example, the registration arrangement illustrated in Figs. 6-10 include an engagement step between the roller 60 and the drum 1 and a disengagement step. In between engagement and disengagement the drive for drum 1 drives both drum 1 and roller 60. While the two members are disengaged the drive for drum 1 need drive only drum 1. These discontinuities in the engagement between drum 1 and roller 60 can cause a variation in the motion of drum 1 which will affect the quality of exposure provided by electronic exposure station 3. In systems in which the drum 1 and roller 60 are not disengaged, the edges of the receiving sheet also provide a discontinuity, not nearly as large as that illustrated in Figs. 6-9 but still capable of affecting imaging. This later variation of the problem will be discussed with reference to Figs. 28-31.

The affect of such discontinuities can be totally eliminated by not writing with exposure station 3 during the discontinuities. Such an arrangement is illustrated in Figs. 12-15 in a system in which one image is created for each revolution of image member 1. According to Fig. 12, one-half or less of the circumference of drum 1 is written on as drum 1 passes exposure station 3. An image is written through an arc ABC as shown in Fig. 12 as drum 1 rotates in a clockwise direction past exposure station 3. The arrow inside the drum 1 illustrates the progressive direction of scan as seen by the drum 1, which is in the opposite direction to the rotation of drum 1 past exposure station 3.

According to Fig. 13, roller 60 and drum 1 are engaged at the edge of transfer sheet 75. At substantially the same instant of engagement, the exposure station 3 is turned off having finished its scan. According to Fig. 14, transfer takes place through half a revolution of the drum 1 and roller 60. As transfer finishes with point C on drum 1 reaching the trailing edge of the receiving sheet 75, laser 3 begins its scan at point A and roller 60 is separated from drum 1 as shown in Fig. 15.

From the process described in Figs. 12-15, it can be seen that both discontinuities at engagement and disengagement can be outside the scanning time of exposure station 3 if slightly less than one-half of drum 1 is used for that exposure. In fact, with the preciseness available with this system, very close to one-half of drum 1 can be used for such exposure. This system thus has a duty cycle of approximately 50%.

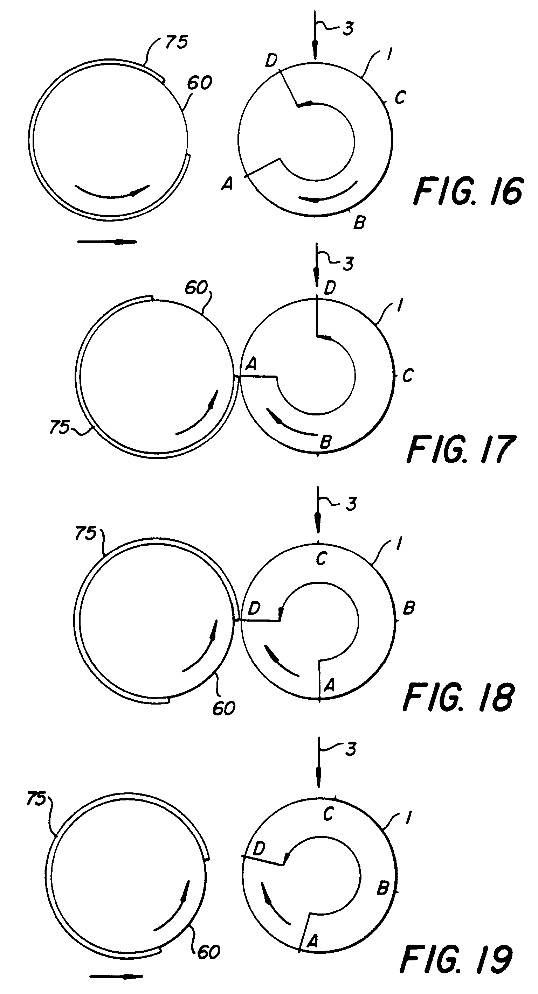

Figs. 16-27 illustrate three approaches to increasing that duty cycle utilizing the imaging scheme described with regard to Figs. 1-5. According to Figs. 16-19, exposure station 3 is 90° from the transfer nip and three-fourths of the circumference of drum 1 is utilized in creating a large image made up of nine smaller images as diagrammed in Fig. 2. Laser exposure station 3 exposes the large image over an arc ABCD. The cross-track interfaces between small images occur at points B and C. This is true whether the long dimension or the short dimension is in the cross-track dimension because both dimensions are divided in thirds according to the Fig. 2 scheme. As shown in Fig. 16, roller 16 is being brought toward engagement with drum 1 as the scan of exposure station 3 approaches its end at point D. As shown in Fig. 17, engagement between roller 60 and drum 1 at point A occurs just as the point D is reached in the scan and the exposure station is turned off. According to Fig. 18 disengagement occurs as point D reaches the point of contact with roller 60. This occurs as point C is being scanned by exposure station 3. Point C is the boundary between the second and third sets of small images shown in Fig. 2. Any fluctuation in the motion of drum 1 would show up as an image artifact at or close to that boundary. Considering the preciseness of the system in general, it is likely that the artifact will occur at a place eliminated in the cutting operation. However, even if it is slightly displaced from that position, it occurs at the least objectionable portion of the image, that is, next to that boundary.

The condition shown in Fig. 17 of engagement involves both the impact of roller 60 moving into drum 1 and also the increased load of driving roller 60 by the drive system for drum 1 and is therefore the greater discontinuity. This system locates that defect essentially outside of any of the image areas with impact occurring as the laser quits writing. The effect of the separation of roller 60 which occurs at the position shown in Fig. 18 primarily is affected only by the immediate decrease in load on the drive system for drum 1. This discontinuity has less effect on image writing than does the condition in Fig. 17 of engagement. Its positioning with the writer at the point C is a preferred approach to reducing discontinuities in the writing overall.

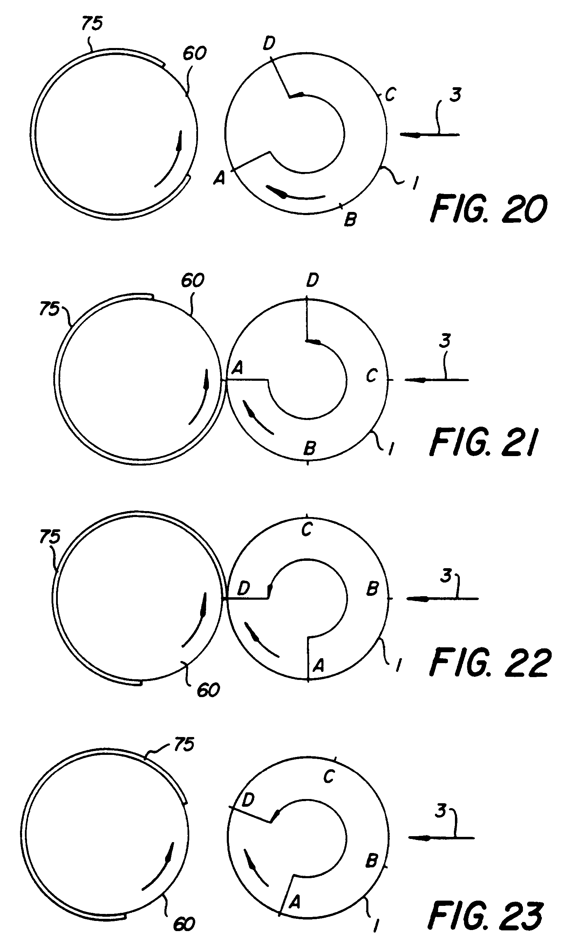

The Figs. 16-19 location of the exposure station 3 forces both the cleaning station and the charging station into the quadrant between the transfer nip and that exposure station. Some machine configurations may not lend themselves to locating those two stations in such a limited space. Figs. 20-23 show an alternative approach, similar to Figs. 16-19, but which allows more space for the cleaning and charging stations. According to Figs. 20-23, the exposure station is located directly opposite the transfer station as in Figs. 12-15. However, the impact of engagement shown in Fig. 21 occurs when the exposure station 3 is at point C, the boundary between the second and third sets of small images shown in Fig. 2. Disengagement, shown in Fig. 22, then occurs at point B which is the boundary between the first and second set of small images in Fig. 2. In this embodiment, both discontinuities occur within the large image but at a boundary between the small images. Although this is not as desirable from an image defect standpoint as the embodiment shown in Figs. 16-19, it is superior in terms of machine geometry.

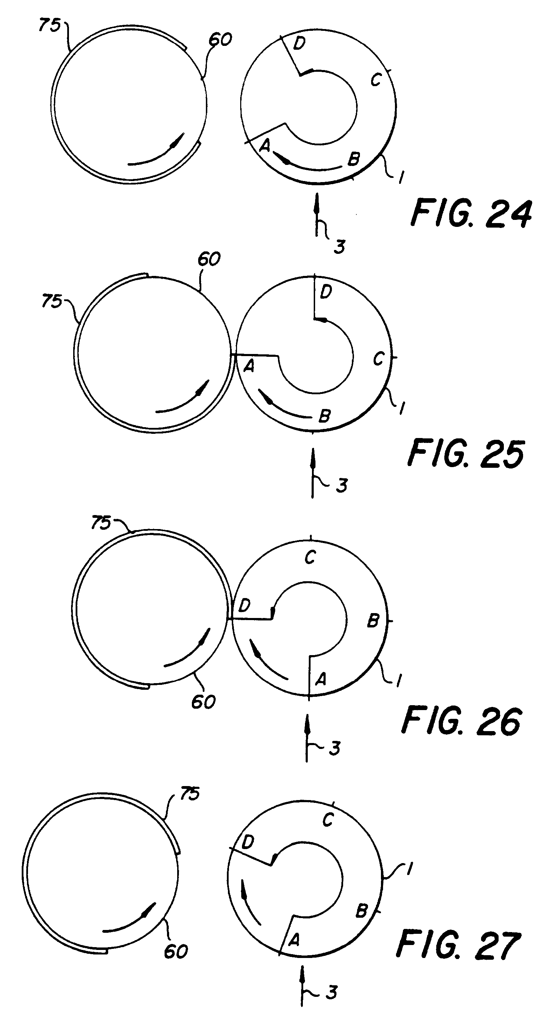

Figs. 24-27 show a third location for the exposure station 3. With this approach, engagement shown in Fig. 25 occurs when point B is being written while disengagement occurs as point A is being written. This approach, while acceptable, is inferior to the other two embodiments in that the larger discontinuity of engagement (Fig. 25) occurs while writing at one of the boundaries between small images rather than outside or nearly outside of the entire large image area. At the same time, from a machine geometry standpoint all of the toning stations must be crowded between the exposure station and the transfer nip. For some toning stations, this would be impossible. However, if toning stations are cycled into and out of position as in some color apparatus, the Fig. 24 through 27 embodiment could be used.

Larger-size prints, for example, those made with the image arrangements shown in Figs. 3-5 will generally end up with the image defect in the images. The larger the overall image, the less serious is a given size of defect. Thus, for the larger sizes the defect may be acceptable. However, if it is not acceptable in very high quality work, the larger images can be done at lower productivity than snapshots, skipping every other frame to avoid the defect entirely. Note that the Fig. 4 arrangement of 5x7′s could be used without the two images on the left side and the discontinuities would occur while the lasers were writing in the borders between the other three images.

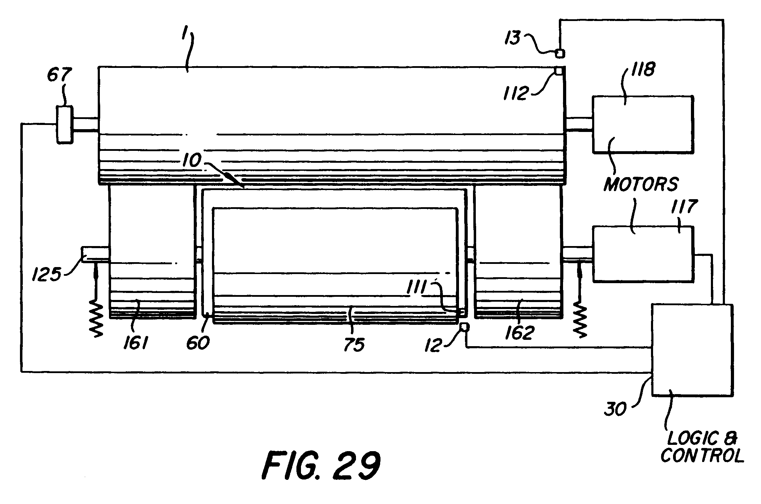

Figs. 28-31 show another variation of the apparatus shown in Figs. 6-10. The cam disks 7 and 8 in Figs. 6-9 and the cam 70 are replaced by a pair of disks 161 and 162 shown in Figs. 28 and 29. According to Fig. 28, internally heated transfer roller 60 is driven by engagement with drum 1 during transfer as in Fig. 10. A stepper motor 117 drives roller 60 through shaft 125 when between transfers.

Disks 161 and 162 have a radius slightly less than the combined radius of heated transfer roller 60 and receiving sheet 75 when sheet 75 is compacted by drum 1 and heated roller 60 in the nip 10. Shaft 125 is spring loaded as shown to obtain the desired pressure for transfer. As shown in Fig. 29, at the end of transfer, as the receiving sheet 75 leaves the nip, the loaded shaft 125 moves toward drum 1 until disks 161 and 162 contact the surface of drum 1 outside the image area.

Disks 161 and 162 are mounted on shaft 125 and are free to rotate with respect to it. As shown in Fig. 29, roller 60 is now separated from drum 1 and can be rotated by motor 117 through shaft 125, essentially as described with respect to Fig. 6. That is, stepper motor 117 rotates roller 60 until it reaches a home position as controlled by sensor 12 sensing a mark 111 on the periphery of roller 60. Roller 60 is then rotated from its home position in timed relation to rotation of drum 1. This can be controlled by sensor 13 which senses a mark 112 on drum 1 or by encoder 67, or both. Drum 1 is driven by a motor 118 and may also include a flywheel (not shown) to steady its movement.

The thickness of receiving sheet 75 and the separation between drum 1 and disks 161 and 162 have been exaggerated in Figs. 28 and 29 to aid the explanation. Disks 161 and 162 can be made less than .002 inches in radius less than the radius of the compacted receiving sheet and roller. Thus, the movement from the edge of the receiving sheet to the disks is very slight. Nonetheless, even that small an impact can result in a discontinuity of visible proportions at the exposure station.

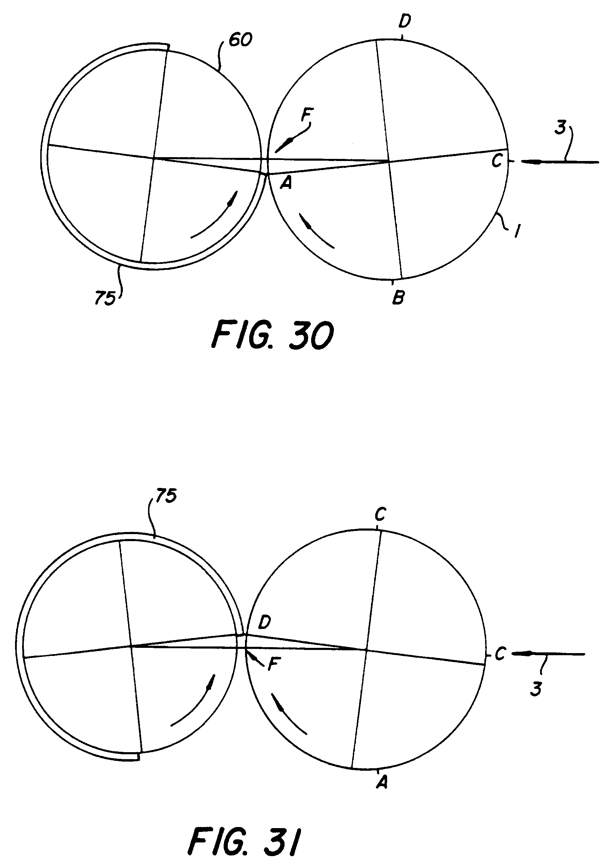

The discontinuities in such a system do not occur exactly as shown in Figs. 12-27, i.e., at the center of the nip. The thickness of the receiving sheet 75 will cause engagement slightly upstream of the nip center and will cause disengagement slightly downstream of the nip center. In systems like that shown in Figs. 28 and 29 in which the transfer roller 60 is reindexed for each image, this variation can be compensated for by making drum 1 slightly larger in diameter than the combined diameter of roller 60 at its operating temperature and receiving sheet 75. This refinement is shown in Figs. 30 and 31. According to Figs. 30 and 31, the circumference of drum 1 is made larger by an amount that will compensate for the width of the nip, i.e., the distance between the points of engagement and disengagement. In the Figs. 30-31 example, the circumference of drum 1 should equal the circumferential distance between the points of discontinuity (the distance between the point A in Fig. 30 at engagement and point D in Fig. 31 at disengagement) plus 4/3rds of the length (in the in-track direction) of the receiving sheet 75. Since the roller and drum are reindexed for each image the circumference of the roller 60 is immaterial, needing to be only big enough to accept sheet 75.

With this arrangement, exposure station 3 is 180° from the center of the nip, point F, and the discontinuities felt by drum 1 occur when point C (Fig. 30) and point B (Fig. 31) are being written. Since they occur on the boundary between images (Fig. 2) they do not affect image quality. The overall arrangement, Figs. 28-31, provides the high quality registration of Figs. 6-10 but with a simpler mechanism.

The invention has been described in detail with particular reference to a preferred embodiment thereof, but it will be understood that variations and modifications can be effected within the scope of the invention as described hereinabove and as defined in the appended claims.

## Claims

1. A method of producing a plurality of multicolor prints from one or more originals, said method comprising:
- forming a series of electrostatic images of a first size on a moving image member (1),
- applying toner of different colors to said series of electrostatic images to create a series of different color toner images, and
- transferring said series of toner images in registration to a single receiving sheet (23; 75) to create a multicolor image thereon,
characterized in that the step of forming a series of electrostatic images includes forming each of said first size images as an array of smaller images being formed from an original and that said method includes the step of cutting said receiving sheet (23; 75) containing the multicolor image according to the position of the smaller images.

2. The method according to claim 1 wherein said single receiving sheet is substantially equal in size to said first size to create the multicolor image thereon.

3. The method according to claim 2 wherein said transfering step further includes positioning the receiving sheet (23; 75) around the periphery of a transfer drum (5; 60) and rotating the transfer drum through transfer relation with the toner images to superpose the toner images on the receiving sheet.

4. The method according to claim 3 wherein the receiving sheet has a leading edge and a trailing edge which are held to said transfer drum during said transfer step.

5. The method according to claim 4 wherein the array of smaller images includes at least one margin between images that runs in a cross track direction relative to the moving image member (1) and said electrostatic image forming step is timed to be at said margin at the same time that said transfer step is beginning or ending to reduce any damage to image quality in the electrostatic image forming step because of a discontinuity in movement of the image member associated with an edge of the receiving sheet passing through transfer relation with the moving image member.

6. Color printing apparatus, comprising:
- an image member (1) movable through a path,
- electronic means (3, 47, 46) for forming a series of electrostatic images of a first size on said image member as it moves through said path, each of said series of images representing the color separations of a multicolor image,
- means (20, 21, 22) for applying toner of different colors to said series of electrostatic images to create a series of different color toner images, and
- means for transferring said series of toner images in registration to a single receiving sheet (23; 75) to create a multicolor image thereon, said transfer means including a transfer roller (5) positioned to rotate through transfer relation with said image member and means (28, 29) for securing a single receiving sheet to said transfer roller,
- means (42) for storing in memory electronic signals corresponding to color separation images for multicolor images to be printed, and
- means (30) for accessing the signals stored in said memory and for controlling said electronic means to create each of said series of first size images as an array of smaller images, each of said smaller images being derived from the signals corresponding to color separation images for a multicolor image to be printed
said apparatus being characterized by
- means (45) for inputting the size of print desired to said control means and said control means (30) including means (46) for controlling said electronic means for forming said smaller images of said input size.

7. Apparatus according to claim 6 wherein said control means (30) including means (46) for generating a bit map for use in forming said smaller images of said input size.

8. Apparatus according to claim 7 wherein said means (46) for generating a bit map includes means for arranging said array according to the input size of print.

9. Apparatus according to claim 8 wherein said means for arranging includes means for providing borders between said smaller images of said array.

10. Apparatus according to claim 8 wherein said means (45) for inputting the size of print desired includes means for inputting a plurality of discrete sizes and wherein said means for arranging includes means for providing a predetermined arrangement for each of said discrete sizes.

11. Apparatus according to claim 10 wherein said size of said receiving sheet (23; 75) is 12 inches by 18 inches and wherein said smaller size image is 4 inches by 6 inches (1 inch = 2,54 cm).

12. Apparatus according to claim 6 wherein said image member is a photoconductive image member (1) and said electronic means includes an electronic printhead (3) and means (2) for uniformly charging said image member.

13. Apparatus according to claim 12 wherein said electronic printhead includes laser exposing means (3).

14. Apparatus according to claim 6 further including means (26) for cutting said receiving sheet (23; 75) according to the location of said smaller images.

15. Apparatus according to claim 6, characterized in that said image member takes the form of a photoconductive drum (1) rotatable through an endless path,
- that said electronic means provides exposure means (3) for forming a series of large electrostatic images on said image drum (1) as it moves through said path, each large image being made up of an array of smaller images, said array having a crosstrack boundary between smaller images,
- that said transfer roller (5; 60) holding a receiving sheet (23; 75) on its periphery is positioned to bring said receiving sheet repeatedly into and out of engagement with said drum (1) as said roller rotates repeatedly through transfer relation with said drum, said engagement and disengagement causing discontinuities in the motion of said drum, and
- that said electronic exposure means includes means (3) for incrementally exposing said photoconductive drum (1) as said drum rotates past said exposure means, said exposure means being positioned to expose said crosstrack boundary between smaller images when a discontinuity in the rotation of said drum occurs.

16. Apparatus according to claim 15 wherein said exposure means includes a laser (3).

17. Apparatus according to claim 15 wherein said exposure means is located approximately 180 degrees around said drum (1) from the center of a nip (10) formed between the drum and roller (5; 60) during transfer.

18. Apparatus according to claim 15 wherein said transfer means includes means for applying a combination of heat and pressure in a nip (10) between said drum (1) and roller (5) to transfer said toner images.

## Patentansprüche

1. Verfahren zum Herstellen einer Vielzahl mehrfarbiger Kopien von einer oder mehreren Vorlagen, wobei
eine Anzahl elektrostatischer Bilder einer ersten Größe auf einem bewegten Bildträger (1) erzeugt wird,
verschiedene Farbtoner auf die Anzahl elektrostatischer Bilder aufgebracht werden, um eine Anzahl verschiedenfarbiger Tonerbilder zu erzeugen,
die Anzahl von Tonerbildern passgenau auf ein einzelnes Empfangsblatt (23; 75) übertragen wird, um ein Mehrfarbenbild zu erzeugen,
dadurch gekennzeichnet, daß beim Erzeugen der Anzahl von elektrostatischen Bildern jedes der Bilder einer ersten Größe als Anordnung kleinerer Abbildungen einer Vorlage erzeugt wird und daß das die Mehrfarbenbilder aufweisende Empfangsblatt (23; 75) gemäß den Positionen der kleineren Abbildungen geschnitten wird.

2. Verfahren nach Anspruch 1, dadurch gekennzeichnet, daß die Größe des zur Erzeugung eines Mehrfarbenbilds verwendeten Empfangsblatts im wesentlichen der ersten Größe entspricht.

3. Verfahren nach Anspruch 2, dadurch gekennzeichnet, daß beim Übertragen der Tonerbilder das Empfangsblatt (23; 75) um die Umfangsfläche einer Übertragungswalze (5; 60) herum angeordnet wird und die Übertragungswalze in Übertragungsbeziehung zu den Tonerbildern drehbar ist, um diese auf dem Empfangsblatt zu überlagern.

4. Verfahren nach Anspruch 3, dadurch gekennzeichnet, daß das Empfangsblatt eine vorlaufende und eine nachlaufende Kante besitzt, die während des Übertragungsvorgangs an der Übertragungswalze festgehalten werden.

5. Verfahren nach Anspruch 4, dadurch gekennzeichnet, daß bei der Anordnung kleinerer Abbildungen mindestens eine Randzone zwischen diesen verläuft, die sich quer zu dem bewegten Bildträger (1) erstreckt, und daß die Erzeugung der elektrostatischen Bilder zeitlich so gesteuert ist, daß sie an der Zone in dem Moment beginnt, in dem die Übertragung beginnt oder endet, um im Falle einer durch eine Kante des Empfangsblatts beim Durchlaufen der Übertragungsbeziehung mit dem bewegten Bildträger hervorgerufenen Unregelmäßigkeit in dessen Bewegung eine Beeinträchtigung der Bildqualität während der Erzeugung des elektrostatischen Bildes zu verhindern.

6. Farbdruckvorrichtung mit
- einem entlang einer Bahn bewegbaren Bildträger (1),
- elektronischen Mitteln (3, 47, 46) zum Erzeugen einer Anzahl elektrostatischer Bilder einer ersten Größe auf dem Bildträger, während dieser sich entlang der Bahn bewegt, wobei jedes der Bilder einen der Farbauszüge eines mehrfarbigen Bildes darstellt,
- Mitteln (20, 21, 22) zum Aufbringen verschiedener Farbtoner auf die elektrostatischen Bilder, um eine Anzahl unterschiedlicher Farbtonerbilder zu erzeugen, und
- einer Einrichtung zum passgenauen Übertragen der Anzahl von Tonerbildern auf ein einzelnes Empfangsblatt (23; 75), um auf diesem ein Mehrfarbenbild zu erzeugen, wobei die Einrichtung eine Übertragungswalze (5) aufweist, die so angeordnet ist, daß sie sich durch den Übertragungsbereich des Bildträgers dreht, und Mitteln (28, 29) zum Befestigen eines einzelnen Empfangsblatts an der Übertragungswalze,
- eine Einrichtung (42), welche die den Farbauszugsbildern der zu erzeugenden Mehrfarbenbilder entsprechenden elektronischen Signale speichert, und
- eine Einrichtung (30) für den Zugriff auf die gespeicherten Signale und zum Steuern der elektronischen Mittel, um jedes der Bilder der ersten Größe in Form einer Anordnung kleinerer Abbildungen zu erzeugen, wobei jede der kleineren Abbildungen aus den Signalen gebildet ist, die den Farbauszügen für ein zu erzeugendes Mehrfarbenbild entsprechen,
**gekennzeichnet durch**
- eine Einrichtung (45) zum Eingeben des gewünschten Bildformats in die Steuereinrichtung (30), welche eine Einrichtung (46) zum Steuern der elektronischen Mittel für die Erzeugung der kleineren Abbildungen des eingegebenen Bildformats aufweist.

7. Vorrichtung nach Anspruch 6, dadurch gekennzeichnet, daß die Steuereinrichtung (30) ein Mittel (46) zum Erstellen einer Bitmap zur Verwendung bei der Erzeugung der kleineren Abbildungen des eingegebenen Bildformats aufweist.

8. Vorrichtung nach Anspruch 7, dadurch gekennzeichnet, daß das Mittel (46) zum Erstellen einer Bitmap ein Mittel aufweist, das die Art der Anordnung der kleineren Abbildungen gemäß dem eingegebenen Bildformat bestimmt.

9. Vorrichtung nach Anspruch 8, dadurch gekennzeichnet, daß das die Art der Anordnung bestimmende Mittel ein Mittel zur Festlegung von Randbereichen zwischen den kleineren Abbildungen der Anordnung aufweist.

10. Vorrichtung nach Anspruch 8, dadurch gekennzeichnet, daß die Eingabeeinrichtung (45) für das gewünschte Bildformat ein Mittel aufweist, mittels dessen eine Vielzahl diskreter Formate eingebbar ist, und daß das die Art der Anordnung bestimmende Mittel ein Mittel aufweist, welches eine vorbestimmte Anordnung für jedes der diskreten Formate festlegt.

11. Vorrichtung nach Anspruch 10, dadurch gekennzeichnet, daß das Empfangsblatt (23; 75) ein Format von 30 x 45 cm und die kleinere Abbildung ein Format von 10 x 15 cm besitzt.

12. Vorrichtung nach Anspruch 6, dadurch gekennzeichnet, daß der Bildträger (1) fotoleitfähig ist und daß die elektronischen Mittel einen elektronischen Druckkopf (3) und eine Einrichtung (2) zum gleichförmigen Aufladen des Bildträgers aufweisen.

13. Vorrichtung nach Anspruch 12, dadurch gekennzeichnet, daß der elektronische Druckkopf eine Laserbelichtungsvorrichtung (3) aufweist.

14. Vorrichtung nach Anspruch 6, dadurch gekennzeichnet, daß eine Vorrichtung (26) vorgesehen ist, die das Empfangsblatt (23; 75) gemäß der Lage der kleineren Abbildungen schneidet.

15. Vorrichtung nach Anspruch 6, dadurch gekennzeichnet, daß der Bildträger als Endlosbahn auf einer drehbaren fotoleitfähigen Trommel (1) ausgebildet ist,
- die elektronischen Mittel eine Belichtungseinrichtung (3) aufweisen, die auf der Trommel (1) bei deren Bewegung entlang der Bahn eine Anzahl großer elektrostatischer Bilder erzeugt, wobei jedes der großen Bilder aus einer Anordnung kleinerer Abbildungen besteht, und wobei die Anordnung zwischen den kleineren Abbildungen einen quer verlaufenden Grenzbereich aufweist,
- die an ihrer Umfangsfläche ein Empfangsblatt (23; 75) haltende Übertragungswalze (5; 60) so angeordnet ist, daß das Empfangsblatt wiederholt in und außer Kontakt mit der Trommel (1) gelangt, wenn sich die Übertragungswalze wiederholt durch den Kontaktbereich dreht, wobei durch das In-und-außer-Kontakt-gelangen Unregelmäßigkeiten in der Bewegung der Trommel entstehen, und daß
- die elektronische Belichtungseinrichtung ein Mittel (3) zum schrittweisen Belichten der fotoleitfähigen Trommel (1) aufweist, während diese sich an der Belichtungseinrichtung vorbeidreht, wobei die Belichtungseinrichtung so angeordnet ist, daß sie den quer verlaufenden Grenzbereich zwischen den kleineren Abbildungen dann belichtet, wenn eine Unregelmäßigkeit in der Drehbewegung der Trommel auftritt.

16. Vorrichtung nach Anspruch 15, dadurch gekennzeichnet, daß die Belichtungseinrichtung einen Laser (3) aufweist.

17. Vorrichtung nach Anspruch 15, dadurch gekennzeichnet, daß die Belichtungseinrichtung um etwa 180° versetzt zum Mittelpunkt des bei der Übertragung zwischen der Trommel und der Übertragungswalze (5; 60) gebildeten Spalts am Umfang der Trommel (1) angeordnet ist.

18. Vorrichtung nach Anspruch 15, dadurch gekennzeichnet, daß die Übertragungsmittel eine Einrichtung aufweisen, die mittels einer Kombination von Wärme und Druck im Bereich eines zwischen der Trommel (1) und der Übertragungswalze (5) gebildeten Spalts (10) wirkt, um die Tonerbilder zu übertragen.

## Revendications

1. Procédé de production d'une multitude d'impressions à couleurs multiples à partir d'un original ou de plusieurs originaux, ledit procédé comprenant les étapes consistant à :
- former des séries d'images électrostatiques d'une première taille sur un élément d'images se déplaçant (1),
- appliquer du toner de couleurs différentes auxdites séries d'images électrostatiques afin de créer des séries d'images de toner de couleurs différentes, et
- transférer lesdites séries d'images de toner en superposition sur une feuille réceptrice unique (23, 75) pour créer une image à couleurs multiples sur celle-ci,
caractérisé en ce que l'étape de formation de séries d'images électrostatiques comprend la formation de chacune desdites images de premier format comme un réseau d'images inférieures qui sont formées à partir d'un original et en ce que ledit procédé comprend l'étape de découpe de ladite feuille réceptrice (23, 75) contenant l'image à couleurs multiples conformément à la position des images plus petites.

2. Procédé selon la revendication 1, dans lequel ladite feuille réceptrice unique est pratiquement égale en format audit premier format afin de créer l'image à couleurs multiples sur celle-ci.

3. Procédé selon la revendication 2, dans lequel ladite étape de transfert comprend de plus le positionnement de la feuille réceptrice (23, 75) autour de la périphérie d'un tambour de transfert (5, 60) et la mise en rotation du tambour de transfert par l'intermédiaire d'une relation de transfert avec les images de toner afin de superposer les images de toner sur la feuille réceptrice.

4. Procédé selon la revendication 3, dans lequel la feuille réceptrice comporte un bord avant et un bord arrière lesquels sont maintenus sur ledit tambour de transfert pendant ladite étape de transfert.

5. Procédé selon la revendication 4, dans lequel le réseau d'images plus petites comprend au moins une marge entre les images qui s'étend dans la direction transversale par rapport à l'élément d'images se déplaçant (1) et ladite étape de formation d'images électrostatiques est cadencée pour être à ladite marge au même moment que ladite étape de transfert commence ou finit afin de réduire toute détérioration quelconque de la qualité d'image dans l'étape de formation d'images électrostatiques du fait d'une discontinuité dans le déplacement de l'élément d'images associé avec un bord de la feuille réceptrice passant en relation de transfert avec l'élément d'image en déplacement.

6. Dispositif d'impression couleur, comprenant :
- un élément d'images (1) pouvant se déplacer le long d'un trajet,
- un moyen électronique (3, 47, 46) pour former des séries d'images électrostatiques d'un premier format sur ledit élément d'images à mesure qu'il se déplace le long dudit trajet, chacune desdites séries d'images représentant les constituants de couleurs d'une image à couleurs multiples,
- un moyen (20, 21, 22) pour appliquer du toner de couleurs différentes auxdites séries d'images électrostatiques afin de créer une série d'images de toner de couleurs différentes, et
- un moyen pour transférer lesdites séries d'images de toner en superposition sur une feuille réceptrice unique (23, 75) afin de créer une image à couleurs multiples sur celle-ci, ledit moyen de transfert comprenant un rouleau de transfert (5) positionné pour tourner en relation de transfert avec ledit élément d'images et un moyen (28, 29) pour fixer une feuille réceptrice unique audit rouleau de transfert,
- un moyen (42) pour enregistrer en mémoire des signaux électriques correspondant aux images de séparation de couleurs pour les images à couleurs multiples pouvant être imprimées, et
- un moyen (30) pour accéder aux signaux mémorisés dans ladite mémoire et pour contrôler ledit moyen électronique afin de créer chacune desdites séries d'images de premier format comme un réseau d'images plus petites, chacune desdites images plus petite étant obtenue à partir des signaux correspondant aux images de séparation de couleur pour une image à couleurs multiples qui doit être imprimée,
ledit dispositif étant caractérisé par : un moyen (45) pour entrer le format d'impression désiré au moyen de commande et le moyen de commande (30) comprenant un moyen (46) pour commander le moyen électronique de formation des images plus petites dudit format d'impression désiré.

7. Dispositif selon la revendication 6 dans lequel le moyen de commande (30) comporte un moyen (46) pour produire une table de correspondance binaire afin de former lesdites images plus petites du format d'entrée.

8. Dispositif selon la revendication 7, dans lequel ledit moyen (46) pour produire une table de correspondance binaire comprend un moyen pour disposer ledit réseau conformément au format d'entrée de l'impression.

9. Dispositif selon la revendication 8, dans lequel ledit moyen pour disposer comprend un moyen pour procurer des bordures entre lesdites images plus petites dudit réseau.

10. Dispositif selon la revendication 8, dans lequel ledit moyen (45) pour entrer le format de l'impression désirée comprend un moyen pour entrer une multitude de formats discrets et dans lequel ledit moyen pour disposer comprend un moyen pour procurer une disposition prédéterminée pour chacune desdits formats discrets.

11. Dispositif selon la revendication 10, dans lequel ledit format de ladite feuille réceptrice (23, 75) est de 12 pouces par 18 pouces et dans lequel ladite image de format plus petit est de 4 pouces par 6 pouces (1 pouce = 2,54 cm).

12. Dispositif selon la revendication 6, dans lequel ledit élément d'images est un élément d'images photoconducteur (1) et ledit moyen électronique comprend une tête d'impression électronique (3) et un moyen (2) pour charger uniformément ledit élément d'images.

13. Dispositif selon la revendication 12, dans lequel ladite tête d'impression électronique comprend un moyen d'exposition laser (3).

14. Dispositif selon la revendication 6, comprenant de plus un moyen (26) pour couper ladite feuille réceptrice (23, 75) conformément à l'emplacement desdites images plus petites.

15. Dispositif selon la revendication 6, caractérisé en ce que ledit élément d'images prend la forme d'un tambour photoconducteur (1) pouvant être mis en rotation dans un trajet sans fin,
- en ce que ledit moyen électronique procure un moyen d'exposition (3) pour former une série d'images électrostatiques larges sur ledit tambour d'images (1) à mesure qu'il se déplace à travers ledit trajet, chaque image large étant constituée d'un réseau d'images plus petites, ledit réseau comportant une limite transversale entre lesdites images plus petites,
- en ce que ledit rouleau de transfert (5, 60) maintenant une feuille réceptrice (23, 75) sur sa périphérie est positionné pour amener de manière répétée ladite feuille réceptrice en engagement et en désengagement avec ledit tambour (1) à mesure que ledit rouleau de pression tourne de manière répétée par l'intermédiaire de la relation de transfert avec ledit tambour, ledit engagement et ledit désengagement entraînant des discontinuités dans le déplacement dudit tambour, et
- en ce que ledit moyen d'exposition électronique comprend un moyen (3) pour exposer incrémentalement ledit tambour photoconducteur (1) à mesure que ledit tambour tourne devant ledit moyen d'exposition, ledit moyen d'exposition étant positionné pour exposer ladite limite transversale entre les images plus petites lorsque la discontinuité de rotation dudit tambour se produit.

16. Dispositif selon la revendication 15, dans lequel ledit moyen d'exposition comprend un laser (3).

17. Dispositif selon la revendication 15, dans lequel ledit moyen d'exposition est placé approximativement à 180 degrés autour dudit tambour (1) à partir du centre d'une pince (10) formée entre le tambour et le rouleau de pression (5, 60) au cours du transfert.

18. Dispositif selon la revendication 15, dans lequel ledit moyen de transfert comprend un moyen pour appliquer une combinaison de chaleur et de pression dans une pince (10) entre ledit tambour (1) et ledit rouleau de pression (5) afin de transférer lesdites images de toner.
